Europäisches Patentamt

European Patent Office

Office européen des brevets

(11) Veröffentlichungsnummer: **0 484 708 A2**

## (12) EUROPÄISCHE PATENTANMELDUNG

(21) Anmeldenummer: **91117685.7**

(22) Anmeldetag: **16.10.91**

(51) Int. Cl.5: **B60P 7/13**, B61D 45/00

(30) Priorität: **05.11.90 DE 9015209 U**

(43) Veröffentlichungstag der Anmeldung:
**13.05.92 Patentblatt 92/20**

(84) Benannte Vertragsstaaten:
**BE DE ES FR GB IT NL**

(71) Anmelder: **Westerwälder Eisenwerk Gerhard GmbH**
**Ringstrasse 20**
**W-5241 Weitefeld(DE)**

(72) Erfinder: **Gerhard, Helmut**
**Im Schlosssteinchen 31**
**W-5241 Weitefeld(DE)**

(74) Vertreter: **Strehl, Schübel-Hopf, Groening**
**Maximilianstrasse 54 Postfach 22 14 55**
**W-8000 München 22(DE)**

(54) **Ladeeinheit.**

(57) Eine Ladeeinheit 1 ist mit Eckbeschlägen 5 zur Befestigung auf einem Straßen- oder Bahntragwagen oder auf einem Flat versehen. Zum Eingriff von auf diesen Trägern üblicherweise vorgesehenen Arretierungselementen 10 ist jeder Eckbeschlag 5 mit einem Langloch 2 versehen, das von der Begrenzungslinie der Grundfläche der Ladeeinheit 1 angeschnitten ausgeführt ist, so daß es eine nach außen offene, gabelförmige Form erhält, um bei vorgegebenem Abstand der Arretierungselemente 10 minimale Außenmaße der Ladeeinheit 1 zu ermöglichen.

FIG.1

EP 0 484 708 A2

Die Erfindung betrifft eine Ladeeinheit nach dem ersten Teil des Anspruchs 1, wie beispielsweise einen Tank- oder sonstigen Container, bzw. eine Palette oder ein Flat, auf dem das zu transportierende Gut befestigt wird. Solche Ladeeinheiten sind meist an den unteren vier Ecken mit Beschlägen nach ISO 1161 zur Befestigung an Arretierungselementen von Fahrzeug- bzw. Schiffsladeflächen oder sonstigen Ladeplattformen versehen.

Eisenbahntragwagen sind typischerweise mit Dornen, Straßenchassis mit Drehschlössern als Arretierungselemente zur Aufnahme von 10'-, 20'-, 30'-, und 40'-ISO-Ladeeinheiten ausgerüstet. Die Drehschlösser haben einen hammerförmigen Kopf, der in in Längsrichtung des Fahrzeugs orientierte Langlöcher der Container-Eckbeschläge eingreift.

Der Seeverkehr andererseits wird nahezu ausschließlich mit 20'- und 40'-Einheiten abgewickelt. Das Ladegeschirr (Spreader) und der Schiffsladeraum sind ganz auf diese Größen ausgerichtet. Kleinere Ladeeinheiten, die beispielsweise Seitenlängen von 800 mm, 1.200 mm oder 2.200 mm aufweisen, werden daher zum Schiffstransport meist auf ISO-Flats fixiert. Dies sind Ladeplattformen mit festen oder klappfähigen Stirnwänden und seitlichen Rungen, deren Außenabmessungen und Beschläge wie bei 20'- oder 40'-Containern gestaltet sind.

Zur Aufnahme von Stapellasten sind derartige Flats meist mit starken Ecksäulen ausgerüstet. Dadurch reduziert sich die zur Verfügung stehende Netto-Ladefläche, wodurch die gemeinsame Verladung zweier 10'x8'-ISO-Container auf einer 20'-ISO-Plattform ausgeschlossen ist.

Gabelförmige Riegel zur Befestigung von Containern auf Stützen sind in US-A-4,708,319 beschrieben.

DE-A-3 501 969 beschreibt einen mittelgroßen Container, dessen Außenabmessungen gegenüber der ISO-Norm reduziert sind, um den Transport auf Straßenfahrzeugen zu erleichtern. Als ISO-kompatible Beschläge sind Riegelplatten vorgesehen, die aus dem Containerrahmen herausziehbar sind und sich beispielsweise an Dornen von Bahntragwagen oder an Drehschlössern von Straßenchassis fixieren lassen. Der beschriebene Eckbeschlag stellt jedoch nicht bei allen auftretenden Belastungen (Horizontal- und Vertikalbeschleunigungen im Straßentransport und Rangierstößen im Schienenverkehr) ein sicheres Verbindungselement dar. Außerdem ist diese bekannte Fixierungsmaßnahme verhältnismäßig aufwendig.

Es ist daher die Aufgabe der Erfindung, eine Ladeeinheit zu schaffen, die einerseits direkt auf mit ISO-kompatiblen Dornen oder Drehschlössern ausgerüsteten Schienen- und Straßenfahrzeugen gesichert und transportiert werden kann, sich andererseits aber auch zur rationellen Verladung auf den im internationalen Verkehr üblichen 20'- und 40'-ISO-Plattformen eignet. Dabei soll der von der Einheit zur Verfügung gestellte Laderaum maximal sein.

Diese Aufgabe wird mit der in Anspruch 1 gekennzeichneten Erfindung gelöst. Ein nach außen offenes, gabelförmiges Langloch ermöglicht eine Reduktion der Abmessungen, insbesondere der Länge, der Ladeeinheit unter Beibehaltung des genormten Lochabstands. Dabei kann es sich um Maße nach ISO-oder anderen Normen handeln. Die Begrenzungslinie der Ladeeinheit bestimmt die für die Nutzlast verfügbare Fläche. Da das Langloch von der Begrenzungslinie angeschnitten ist, ist diese Fläche nur wenig kleiner als bei üblichen 10'x8'-ISO-Containern, aber größer als bei dem in DE-A-3 501 969 beschriebenen Container.

Das Langloch kann je nach Bauweise der Ladeeinheit beispielsweise in einem Eckbeschlag oder auch im Eckbereich des Rahmens oder der Grundplatte vorgesehen sein.

Genormte Eckbeschläge mit geschlossenem Langloch sind meistens für hohe Belastungen ausgelegt. Bei Eckbeschlägen nach ISO 1161 sind Bruttogesamtlasten von 30,5 metrischen Tonnen zugelassen. Kleinere Ladeeinheiten sind jedoch meist erheblich leichter. Die Bruttogesamtlast eines 10'-ISO-Containers liegt in der Regel zwischen 10 und 15 Tonnen. Daher sind offen ausgebildete gabelförmige Langlöcher zur Aufnahme der erforderlichen Kräfte geeignet. In vielen Fällen ist sogar eine Verankerung an nur zwei statt vier Stellen ausreichend.

Die aufzunehmenden Kräfte entstehen durch horizontale und vertikale Beschleunigungen, durch Windlast und im Bahnverkehr insbesondere durch Rangierstöße.

Die Ausgestaltung nach Anspruch 2 ermöglicht eine minimale Länge der Ladeeinheit bei gleichzeitig ausreichender Stabilität der Eckbereiche und Verankerung mittels Drehschlössern oder Dornen.

Liegt gemäß Anspruch 3 der hammerförmige Kopf eines Drehschlosses in verriegelter Stellung in seiner ganzen Breite auf dem Lochrand auf, so sind die übertragbaren Kräfte ähnlich denen eines konventionellen geschlossenen Langlochs.

Die gemäß Anspruch 4 mit zwei geschlossenen und zwei offenen Langlöchern versehene Ausführungsform ist zur Aufnahme besonders hoher Belastungen geeignet. Bei geschlossenen Langlöchern ist die Gefahr eines Aufweitens nahezu ausgeschlossen. Außerdem kann zuverlässig vermieden werden, daß die Ladeeinheit aus der Verankerung herausrutscht.

Vorteilhafte Ausführungsbeispiele der Erfindung sind in der Zeichnung dargestellt. Darin zeigen die Figuren 1 bis 3 schematisch in Draufsicht die Bodengruppe von Ladeeinheiten und ihre Fixierung auf Bahn- oder Straßenfahrzeugen mit für 10'-ISO-Container vorgesehenen Arretierungselementen. In Figur 2 und 3 sind die Ladeeinheiten jeweils nur zur Hälfte gezeigt. Die nicht dargestellte Hälfte ist symmetrisch zur abgebildeten Hälfte gestaltet.

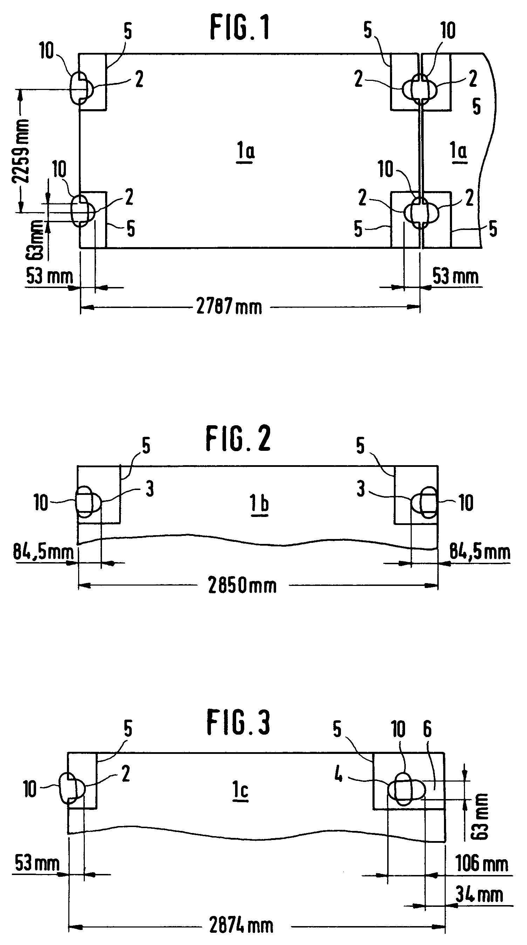

Die in Figur 1 gezeigten Ladeeinheiten 1a sind mittels Drehschlössern auf einem (nicht dargestellten) Tragwagen arretiert. Der hammerförmige Kopf 10 eines Drehschlosses ist jeweils in verriegelter Stellung dargestellt. Üblicherweise beträgt die Querschnittsfläche eines Kopfes ca. 57 mm x 100 mm. Das Langloch eines konventionellen Eckbeschlags hat daher meist eine Breite von 63 mm und eine Länge von 124 mm, die bei Mittelcontainern der hier beschriebenen Art auf 106 mm verkürzt werden kann. Demgegenüber ist die Länge eines Langlochs 2 im vorliegenden Ausführungsbeispiel bei jedem der vier Eckbeschläge 5 auf 53 mm halbiert. Das Langloch 2 ist angeschnitten bzw. offen ausgeführt. Dadurch wird eine Verminderung der Außenlänge einer Ladeeinheit auf 2787 mm möglich. Die Normlänge eines 10'-ISO-Containers beträgt demgegenüber 2991 mm.

Die Gesamtlänge zweier solcher Ladeeinheiten 1a beträgt 5574 mm. Sie lassen sich auch unter Berücksichtigung der für die Verladung notwendigen Toleranzen auf einer 20'-ISO-Plattform mit der üblichen Netto-Ladelänge von ca. 5700 mm bis ca. 5860 mm anordnen.

Wie dargestellt, lassen sich zwei Ladeeinheiten 1a mit offenen Langlöchern 2 halber Länge so aneinanderstellen, daß sie von zwei Arretierungselementen 10 jeweils gemeinsam fixiert werden.

Im Gegensatz zu Figur 1 beträgt die Länge eines Langlochs 3 der Ladeeinheit 1b nach Figur 2 ca. 84,5 mm. Dadurch liegt der Kopf 10 eines Drehschlosses im wesentlichen mit seiner gesamten Breite auf dem Lochrand auf, so daß die Stabilität der Verankerung gegenüber allen auftretenden Kräften im wesentlichen einem konventionellen, geschlossenen Langloch entspricht.

Die Materialstärke des Eckbeschlags 5 im Bereich eines Langlochs 2 mit halber Länge sollte dem für ISO-Beschläge geforderten Wert von 28 mm entsprechen. Bei einem längeren Langloch 3 sind, wie für UIC-Binnencontainer vorgesehen, 20 mm ausreichend. Mit diesen Werten wird ein Aufweiten oder seitliches Ausbrechen der Langlöcher 2 und 3 unter Belastung vermieden.

Die in Figur 3 dargestellte Ladeeinheit 1c ist an einer Querseite mit einem halblangen Langloch 2, an der anderen Querseite dagegen mit einem konventionellen, geschlossenen Langloch 4 versehen. Dieses ist von einem ca. 34 mm breiten Steg 6 umgeben, wodurch sich eine Gesamtlänge der Ladeeinheit von 2874 mm ergibt. Diese Bauweise ermöglicht es, daß die Ladeeinheit 1c in bestimmten Fällen nur an zwei Drehschlössern 10 bzw.

Dornen fixiert wird, die dabei in die geschlossenen Langlöcher 4 eingreifen, ohne daß die Gefahr besteht, daß die Ladeeinheit 1c aus der Arretierung herausrutscht.

Jeweils zwei der in den Figuren 2 und 3 dargestellten Ladeeinheiten 1b oder 1c benötigen auf einem 20'-ISO-Flat eine Netto-Ladelänge von 5700 mm bzw. 5758 mm. Diese Ladelängen stehen auf den meisten modernen Flats zur Verfügung.

Zur optimalen Ausnutzung der Ladelänge eines Straßen- oder Bahntragwagens kann die Ladeeinheit 1a, 1b oder 1c entlang ihrer unteren Seitenkante auch mit weiteren Langlöchern versehen sein, die beispielsweise in einem Mittenabstand von 140 mm oder 280 mm voneinander angeordnet sind. Dadurch läßt sich die Ladeeinheit 1a, 1b bzw. 1c an vorgegebenen Arretierungselementen 10 in feinen Schritten in verschiedenen dicht beieinanderliegenden Positionen fixieren.

Bei der erfindungsgemäßen Ladeeinheit 1 kann es sich sowohl um eine Palette als auch um eine Box oder einen Container beispielsweise zum Transport von Flüssigkeiten, Gasen oder Schüttgütern handeln.

**Patentansprüche**

1. Ladeeinheit (1) mit Langlöchern (2, 3, 4) in den Eckbereichen (5) zum Eingriff von auf Fahrzeugplattformen vorhandenen Arretierungselementen (10),

   dadurch gekennzeichnet, daß mindestens eines der beiden Langlöcher (2, 3) durch die Begrenzungslinie der Grundfläche der Ladeeinheit (1) angeschnitten und dadurch gabelförmig nach außen offen ist.

2. Ladeeinheit nach Anspruch 1, gekennzeichnet durch vier Eckbereiche (5) mit jeweils einem nach außen offenen gabelförmigen Langloch (2), dessen Länge im wesentlichen der Hälfte der Länge des Arretierungselementes (10) entspricht.

3. Ladeeinheit nach Anspruch 1, gekennzeichnet durch vier Eckbereiche (5) mit jeweils einem nach außen offenen gabelförmigen Langloch (3), dessen Länge so bemessen ist, daß der Kopf (10) des als Drehschloß ausgebildeten Arretierungselements in verriegelter Stellung im wesentlichen mit seiner vollen Breite auf dem Rand des Langlochs (3) aufliegt.

4. Ladeeinheit nach Anspruch 1, dadurch gekennzeichnet, daß zwei Eckbereiche (5) einer Querseite jeweils ein geschlossenes Langloch (4) und zwei Eckbereiche (5) der anderen Querseite der Ladeeinheit (1) jeweils ein offenes gabelförmiges Langloch (2) aufweisen.

## FIG.1

1a    1a

2259 mm
63 mm
53 mm    53 mm
2787 mm

## FIG.2

1b

84,5mm    84,5mm
2850mm

## FIG.3

1c

53 mm    63 mm
106 mm
34 mm
2874 mm